# EUROPEAN PATENT APPLICATION

(11) **EP 3 228 730 A1**
(43) Date of publication of application: **11.10.2017**
(21) Application number: 15866351.8
(22) Date of filing: 17.09.2015
(51) Int. Cl.: C23F 1/22, B29C 45/02, B29C 45/14

(54) **ETCHING AGENT AND REPLENISHING SOLUTION THEREFOR, METHOD FOR ROUGHENING SURFACE OF MAGNESIUM COMPONENT, AND METHOD FOR MANUFACTURING MAGNESIUM-RESIN COMPOSITE**

(30) Priority: 01.12.2014 JP 2014242948
(71) Applicant: MEC COMPANY LTD., Amagasaki-shi Hyogo 660-0822 (JP)
(72) Inventor: AKIYAMA,Daisaku, Amagasaki-shi Hyogo 660-0822 (JP); RAIJO, Mina, Amagasaki-shi Hyogo 660-0822 (JP)
(74) Representative: TBK
(86) International application number: PCT/JP2015/076483
(87) International publication number: WO 2016/088432

(57) **Abstract**

The etching agent is an aqueous solution including at least one acid selected from the group consisting of inorganic acids other than nitric acid, and organic acids; and an organic nitrogen compound having a molecular structure containing N-OH or N-O-. The acid concentration of the etching agent is 0.05 to 3 % by weight, and the organic nitrogen compound concentration of the etching agent is 0.005 to 5 % by weight. By bringing the etching agent into contact with a surface of a magnesium component, fine irregularities can be formed on the surface of the magnesium component even when etching depth is large.

## Description

### TECHNICAL FIELD

The invention relates to an etching agent for magnesium component and a replenishing solution therefor used for roughening surface of a magnesium component. The invention also relates to a method for roughening surface of a magnesium component and a method for manufacturing magnesium-resin composite.

### BACKGROUND ART

Techniques for integrally bonding a magnesium component to a resin material are developed in various fields, mainly including the fields of automobile and electrical engineering. Conventionally, adhesives are commonly used for bonding between resin and magnesium components. However, the use of adhesives is a contributing factor to a complicated manufacturing process and an increase in product cost. In addition, the use of adhesives can reduce the bonding strength at high temperature, which makes it difficult to use the techniques for applications requiring heat resistance.

Thus, there are studies on techniques for integrally bonding resin to magnesium components with no adhesive. For example, Patent Document 1 discloses that when a magnesium component is immersed in an inorganic acid aqueous solution, fine irregularities are formed on the surface of the magnesium component, so that the resulting magnesium component can be bonded with high strength to resin even without any adhesive. Patent Document 2 discloses that the acid-treated magnesium component has a satin-like surface.

Magnesium components are generally formed by rolling, die casting, or injection molding. Therefore, for example, mechanical oils and release agents used in the forming process are deposited on the surface of the magnesium components and enter the magnesium components. Thus, Patent Documents 1 and 2 disclose a process that includes performing a degreasing treatment to remove oils deposited on the surface of a magnesium component, then performing an etching treatment with an acid at a relatively high concentration (rough etching) to dissolve and remove the oil-contaminated part of the magnesium component, and then performing an etching treatment with an acid at a relatively low concentration. As disclosed in Patent Document 3, the treatment for degreasing the magnesium component is performed generally using an aqueous solution containing a surfactant and a defoaming agent.

### PRIOR ART DOCUMENTS

### PATENT DOCUMENTS

Patent Document 1: JP 2007-50630 A
Patent Document 2: JP 2012-246542 A
Patent Document 3: JP 2003-293174 A

### SUMMARY OF THE INVENTION

### PROBLEMS TO BE SOLVED BY THE INVENTION

As mentioned above, roughening the surface of magnesium components requires a pretreatment for removing contaminants such as oils deposited on their surface and entering their interior, which makes the process complicated. If a magnesium alloy is surface-treated with an acid at a low concentration without any degreasing treatment, fine irregularities can be formed on the surface at an etching depth of about 3 to about 5 µm. Unfortunately, oils and other contaminants can reach a depth of about 5 to about 10 µm from the surface of magnesium components. Therefore, if the etching depth is 5 µm or less, contaminants such as oils may be insufficiently removed and thus remain on the surface after the etching. Therefore, if the etching depth is 5 µm or less, it may be difficult to form a magnesium component-resin composite with high bonding strength between them.

An increase in acid etching depth makes it possible to sufficiently remove contaminants, such as oils, entering magnesium components. However, as the acid etching depth increases, the irregularities formed on the magnesium component surface become coarse, and the in-plane uniformity of the irregularities decreases, so that the magnesium component surface will have insufficient bonding strength to resins. In other words, roughening the surface of magnesium components with an acid has a problem in that if the etching depth is small, the roughened surface can have low bondability to resins due to remaining contaminants such as oils, and if the etching depth is large, the roughened surface can have low bondability to resins because any roughened shape suitable for bonding is not formed.

In view of these problems, an object of the invention is to provide an etching agent that makes it possible to form a roughened shape that exhibits high bondability to resins on the surface of magnesium components even when the etching is performed to a depth enough to remove oils and other contaminants entering the magnesium components, and another object of the invention is to provide a replenishment solution for the etching agent.

### MEANS FOR SOLVING THE PROBLEMS

The etching agent of the invention is an etching agent for magnesium components. The etching agent of the invention is an aqueous solution containing an acid and a specific organic nitrogen compound. The magnesium components may be made of magnesium or a magnesium alloy. Hereinafter, when used alone, the term "magnesium" is intended to include magnesium and magnesium alloys.

The organic nitrogen compound in the etching agent of the invention has a molecular structure containing N-OH or N-O⁻. The organic nitrogen compound is preferably, for example, a hydroxylamine, an oxime, or an amine oxide. The acid may be an inorganic acid other than nitric acid or an organic acid. In particular, hydrohalic acid or sulfuric acid is preferably used. The etching agent of the invention has an acid concentration of 0.05 to 3% by weight and an organic nitrogen compound concentration of 0.005 to 5% by weight.

The invention is also directed to a replenishment solution that is to be added to the etching agent for continuous or repeated use of the etching agent. The replenishment solution is an aqueous solution containing the organic nitrogen compound.

The invention is also directed to a surface roughening method including bringing the etching agent and the surface of a magnesium component into contact with each other to roughen the surface of the magnesium component. The total etching amount in the depth direction of the magnesium component is preferably 6 µm or more.

A magnesium-resin composite is obtained by bonding a resin composition to the surface of the magnesium component after the roughening treatment. The method for bonding the resin composition to the surface of the magnesium component may be, for example, injection molding or transfer molding.

### EFFECTS OF THE INVENTION

When a magnesium component is treated with the etching agent of the invention, the magnesium component can be successfully etched while contaminants, such as oils, deposited on the surface of the magnesium component and entering the magnesium component are removed. Therefore, even when the etching depth is large, a fine roughened shape can be uniformly formed on the magnesium component surface, so that the magnesium component surface can have high bondability to resins.

### BRIEF DESCRIPTION OF THE DRAWINGS

FIG. 1 is a perspective view showing the structure of a magnesium-resin composite for bonding strength measurement.
FIG. 2 is a SEM photograph of a surface of a magnesium component subjected to a roughening treatment using an etching agent of Example 1.
FIG. 3 is a SEM photograph of a surface of a magnesium component subjected to a roughening treatment using an etching agent of Example 2.
FIG. 4 is a SEM photograph of a surface of a magnesium component subjected to a roughening treatment using an etching agent of Example 3.
FIG. 5 is a SEM photograph of a surface of a magnesium component subjected to a roughening treatment using an etching agent of Example 4.
FIG. 6 is a SEM photograph of a surface of a magnesium component subjected to a roughening treatment using an etching agent of Example 5.
FIG. 7 is a SEM photograph of a surface of a magnesium component subjected to a roughening treatment using an etching agent of Example 6.
FIG. 8 is a SEM photograph of a surface of a magnesium component subjected to a roughening treatment using an etching agent of Example 7.
FIG. 9 is a SEM photograph of a surface of a magnesium component subjected to a roughening treatment using an etching agent of Comparative Example 1.
FIG. 10 is a SEM photograph of a surface of a magnesium component subjected to a roughening treatment using an etching agent of Comparative Example 2.
FIG. 11 is a SEM photograph of a surface of a magnesium component subjected to a roughening treatment using an etching agent of Comparative Example 3.
FIG. 12 is a SEM photograph of a surface of a magnesium component subjected to a roughening treatment using an etching agent of Comparative Example 4.
FIG. 13 is a SEM photograph of a surface of a magnesium component subjected to a roughening treatment using an etching agent of Comparative Example 5.
FIG. 14 is a SEM photograph of a surface of a magnesium component subjected to a roughening treatment using an etching agent of Comparative Example 6.
FIG. 15 is a SEM photograph of a surface of a magnesium component subjected to a roughening treatment using an etching agent of Comparative Example 7.
FIG. 16 is a SEM photograph of a surface of a magnesium component subjected to a roughening treatment using an etching agent of Comparative Example 8.
FIG. 17 is a SEM photograph of a surface of a magnesium component subjected to a roughening treatment using an etching agent of Comparative Example 9.
FIG. 18 is a SEM photograph of a surface of a magnesium component subjected to a roughening treatment using an etching agent of Comparative Example 10.

### MODE FOR CARRYING OUT THE INVENTION

### [Etching agent]

The etching agent of the invention is an etchant for magnesium component that is suitable for surface treatment of magnesium components. The etching agent of the invention is an acidic aqueous solution containing a specific organic nitrogen compound. Hereinafter, each constituent in the etching agent of the invention will be described.

### <Acid>

The etching agent of the invention is an acidic aqueous solution and thus contains an acid constituent. The acid constituent plays a role in dissolving magnesium and forming a roughened shape on a surface. The acid may be an inorganic acid or an organic acid. Examples of inorganic acids that can be preferably used include hydrohalic acids such as hydrofluoric acid, hydrochloric acid (muriatic acid), hydrobromic acid, and hydroiodic acid; and sulfuric acid, phosphoric acid, perchloric acid, and sulfamic acid. In this regard, nitric acid can inhibit the roughened shape-forming effect of the organic nitrogen compound described below and thus is not suitable for use in the etching agent of the invention. Examples of organic acids include sulfonic acid, carboxylic acids, and other acids. These acids may be used alone or in combination of two or more.

Among these acid constituents, inorganic acids are preferred in order to increase the acid concentration of the etching agent so that the etching rate can be maintained at an appropriate level. In particular, hydrohalic acids and sulfuric acid are preferred in order to form a fine roughened shape uniformly on the surface of magnesium components and to reduce costs. Among hydrohalic acids, hydrochloric acid and hydrobromic acid are preferred, and hydrochloric acid is particularly preferred. Among organic acids, carboxylic acids are preferred for uniformity of the roughened shape.

The concentration of the acid in the etching agent is from 0.05 to 3% by weight. Excessively low acid concentration and excessively high acid concentration will both make it difficult to form a fine roughened shape on the surface. An acid concentration of 0.05% by weight or more will make it possible to uniformly form a fine roughened shape on the surface of magnesium components and to reduce the frequency of replacement of the etching agent or the frequency of supply of the replenishment solution, which will provide high productivity. An acid concentration of 3% by weight or less will make it possible to uniformly form a fine roughened shape on the surface of magnesium components and make it easy to control the etching amount. The concentration of the acid in the etching agent is preferably from 0.08 to 2% by weight, more preferably from 0.1 to 1.5% by weight, further preferably from 0.2 to 1% by weight.

### <Organic nitrogen compound>

The etching agent of the invention includes an organic nitrogen compound having a molecular structure containing N-OH or N-O-. The organic nitrogen compound is an additive contained in the acidic solution containing the acid constituent. The use of the acid in combination with the organic nitrogen compound makes it possible to perform etching while removing contaminants such as oils deposited on the surface of magnesium components and oils entering magnesium components. As a result, even when the etching depth is large, a fine roughened shape can be uniformly formed on the magnesium component surface, which will increase the bondability of the magnesium component surface to resins.

Examples of the organic nitrogen compound include hydroxylamines (chemical formula (1) below), oximes (chemical formula (2) below), amine oxides (chemical formulae (3) and (3') below), hydroxamic acids (chemical formula (4) below), and azoxy compounds (chemical formula (5) below). These organic nitrogen compounds may be used alone or in combination of two or more.

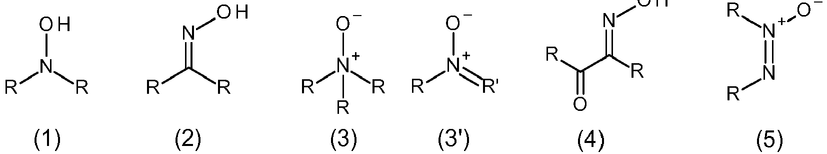

In each chemical formula, R and R' are each a hydrogen atom or any substituent having a carbon or oxygen atom bonded to the nitrogen atom in the molecular structure. A plurality of R groups may be the same or different. In each of formulae (1) to (5), a plurality of R groups may form a ring structure. In formula (3'), the R and R' groups may form a ring structure. The R and R' groups may each have any structure as long as the organic nitrogen compound is soluble in water. R may be an alkyl, alkylene, alkoxy, or polyoxyalkylene group, which preferably has 20 or less carbon atoms, more preferably 18 or less carbon atoms, further preferably 14 or less carbon atoms.

In view of uniform formation of a fine roughened shape on the surface of magnesium components and in view of storage stability or continuous usability of the etching agent, examples of the organic nitrogen compound having a molecular structure containing N-OH or N-O- are preferably hydroxylamines, oximes, and amine oxides, more preferably amine oxides.

Examples of water-soluble hydroxylamines include hydroxylamine; N-(C₁₋₆ alkyl)-N-hydroxylamines (compounds of chemical formula (1) in which one R group is H and the other R group is C₁₋₆ alkyl) such as methylhydroxylamine, ethylhydroxylamine, n-propylhydroxylamine, isopropylhydroxylamine, n-butylhydroxylamine, tert-butylhydroxylamine, and cyclohexylhydroxylamine; N,N-bis(C₁₋₆ alkyl)-N-hydroxylamines (compounds of chemical formula (1) in which both R groups are C₁₋₆ alkyl) such as N,N-dimethylhydroxylamine and N,N-diethylhydroxylamine; N-(hydroxy C₁₋₆ alkyl)-N-hydroxylamines (compounds of chemical formula (1) in which one R group is H and the other R group is C₁₋₆ hydroxylalkyl) such as (2-hydroxyethyl)hydroxylamine and (1,3-dihydroxy-n-propyl)-1-hydroxylamine; N,N-bis(hydroxy C₁₋₆ alkyl)-N-hydroxylamines (compounds of chemical formula (1) in which both R groups are C₁₋₆ hydroxylalkyl) such as bis(1,2-dihyroxyethyl)-N-hydroxylamine; N-C₁₋₆ alkyl-N-(hydroxy C₁₋₆ alkyl)-N-hydroxylamines (compounds of chemical formula (1) in which one R group is C₁₋₆ alkyl and the other R group is hydroxyl C₁₋₆ alkyl) such as ethylhydroxymethylhydroxylamine, ethyl-2-hydroxyethylhydroxylamine, and ethyl-1,2-dihydroxyethylhydroxylamine, and esters thereof; N-alkyl-N-aminoalkyl-N-hydroxylamines such as N-methyl-N-[1-methyl-2-(methylamino)ethyl]hydroxylamine; and hydroxylamine-N-sulfonic acid.

Examples of water-soluble oximes include aldoximes such as formoxime, acetoxime, pyridine-2-aldoxime, pyridine-4-aldoxime, isonitrosoacetophenone, α-benzaldoxime, and salicylaldoxime; ketoximes such as dimethylglyoxime, 2-butanone oxime, isobutyl methyl ketoxime, 2,3-butanedione monoxime, 1,3-dihydroxyacetone oxime, pinacolin oxime, 3-hydroxy-3-methyl-2-butanone oxime, violuric acid, diaminoglyoxime, 2-isonitrosopropiophenone, di-2-pyridylketoxime, cyclopentanone oxime, cyclohexanone oxime, cycloheptanone oxime, acetophenone oxime, α-benzoin oxime, β-isatoxime, diacetylmonoxime, and phthaloxime; dioximes such as glyoxime (glyoxal dioxime), 2,3-butanedione dioxime, 2,4-pentanedione dioxime, 1,4-benzoquinone dioxime, 1,2-cyclohexanedione dioxime, 1,4-cyclohexanedione dioxime, oxamide dioxime, dichloroglyoxime, dimedone dioxime, and nioxime; benzamidoxime, and N,N"-dihydroxyethanediimidamide.

Examples of water-soluble amine oxides include aliphatic alkylamine oxides such as trimethylamine oxide, ethyldimethylamine oxide, triethylamine oxide, and hexyldimethylamine oxide; decyldimethylamine oxide, lauryldimethylamine oxide, coconut alkyldimethylamine oxide; tetradecyldimethylamine oxide; amine oxides generally used as surfactants, such as aliphatic C₁₀₋₁₈ alkyldimethylamine oxides including oleyldimethylamine oxide, and aliphatic C₈₋₁₆ alkoxyethyldihydroxyethylamine oxides including decylbis(2-hydroxyethyl)amine oxide and dodecylbis(2-hydroxyethyl)amine oxide; nitrogen-containing heterocyclic oxides such as pyridine N-oxide and N-methylmorpholine N-oxide; and aliphatic aromatic amine oxides such as benzylethylmethylamine oxide.

The concentration of the organic nitrogen compound in the etching agent is from 0.005 to 5% by weight. If the concentration of the organic nitrogen compound is excessively low, the resulting roughened shape will tend to be nonuniform. On the other hand, if the concentration of the organic nitrogen compound is excessively high, fine roughened shape will be hardly formed. When the concentration of the organic nitrogen compound is from 0.005 to 5% by weight, the use of the etching agent makes it possible to uniformly form a fine roughened shape on magnesium components while removing contaminants such as oils deposited on the surface of the magnesium components and oils entering the magnesium components. The concentration of the organic nitrogen compound in the etching agent is preferably from 0.01 to 3% by weight, more preferably from 0.1 to 2% by weight, further preferably from 0.2 to 1.5% by weight.

As shown by the comparison between the examples and the comparative examples described below, a fine roughened shape cannot be formed using a mixture or combination of an acid with an amine surfactant and a defoaming agent, which are commonly used to degrease magnesium components, whereas such a fine roughened shape can be successfully formed using the etching agent of the invention. Even when the etching depth is large, a fine roughened shape can be successfully formed using the etching agent of the invention. The reason for this may be related to the ability of the N-OH or N-O⁻ moiety of the organic nitrogen compound to interact (*e.g*., forming a complex) with the metal of the magnesium component surface or metal ions dissolved in the etching agent, under the presence of the acid.

### <Additional constituents>

Additional constituents may be included in the etching agent of the invention, as long as the effects of the invention are not impaired. For example, a surfactant may be added for the purpose of, for example, preventing in-plane unevenness of roughening due to surface contaminants such as finger print stains. When the organic nitrogen compound is an amine oxide, it not only allows uniform formation of a fine roughened shape but also contributes to prevention of uneven roughening. The etching agent of the invention may also contain a surfactant other than the amine oxide. The etching agent of the invention may also contain, for example, a complexing agent, a chelating agent, a stabilizer, or a defoaming agent as an additional constituent. These additional constituents are preferably contained at a concentration of 5% by weight or less.

A defoaming agent contained in the etching agent may inhibit the roughened shape -forming effect of the organic nitrogen compound, and the inhibitory tendency may be significant if the organic nitrogen compound is an amine oxide. It is therefore preferable that the etching agent of the invention is free from defoaming agent or contains a defoaming agent at a concentration of 1/100 or less of that of the organic nitrogen compound.

The etching agent of the invention can be prepared by dissolving each constituent (described above) in, for example, ion-exchanged water.

### [Replenishing solution]

The replenishing solution of the invention is to be added to the above etching agent for continuous or repeated use of the etching agent. The replenishing solution of the invention is an aqueous solution containing the aforementioned organic nitrogen compound. By adding the replenishing solution to the etching agent, the proportion of each constituent in the etching agent can be maintained at a proper level, so that the above effects of the etching agent of the invention can be stably maintained.

The replenishing solution is preferably an acidic aqueous solution in order to control the acid concentration of the etching agent or suppress fluctuations in the acid concentration. The concentration of the organic nitrogen compound in the replenishment solution may be selected as appropriate depending on the concentration of the organic nitrogen compound in the etching agent. The concentration of the organic nitrogen compound in the replenishment solution is preferably from about 0.01 to about 5% by weight in order to stably maintain the above effects of the etching agent of the invention. In addition to the organic nitrogen compound and the acid described above, the replenishment solution may also contain additional constituents acceptable as additives for the etching agent.

### [Roughening treatment of magnesium component]

Next, a description will be given of a treatment for roughening a magnesium component with the etching agent of the invention.

The magnesium component to be subjected to the roughening treatment may be a magnesium material or a magnesium alloy material. Examples of the magnesium alloy include alloys of Mg with Al, Zn, Mn, Si, Cu, Fe, Ag, Zr, Sr, Pb, Re, Y, or rare earth metals such as misch metal. Typical examples of the magnesium alloy include, for example, AZ91, AM60, AM50, AM20, AS41, AS21, and AE42. The term "magnesium component" is intended to include not only magnesium alloy materials standardized by American Society for Testing and Materials (ASTM) but also every type of alloy material including magnesium as a main constituent metal, such as magnesium alloys standardized by Japanese Industrial Standards (JIS), International Organization for Standardization (ISO), or other standards. Examples of methods for processing the magnesium component include die casting methods, casting methods, injection molding methods, hammering, and cutting.

The roughening treatment is performed by bringing the magnesium component into contact with the etching agent of the invention. In this process, the entire surface of the magnesium component may be subjected to the roughening treatment, or the surface of the magnesium component may be partially subjected to the roughening treatment so that only the part to be attached to a resin composition can be roughened.

The method for the roughening treatment may be, for example, immersion or spraying. The treatment conditions are not limited, and any conditions under which the desired etching depth can be achieved may be selected. When the magnesium component is immersed in the etching agent, the etching is preferably performed under the conditions of an etching agent temperature of 20 to 60°C and a period of 10 to 900 seconds. In the spraying method, the etching is preferably performed under the conditions of an etching agent temperature of 20 to 60°C, a spray pressure of 0.05 to 0.3 MPa, and a period of 20 to 1500 seconds. The roughening treatment is generally followed by water washing and drying.

By the roughening treatment, the surface of the magnesium component is roughened to form irregularities. The total etching amount (dissolution) in the depth direction of the magnesium component is preferably 6 µm or more, more preferably 8 µm or more, further preferably 10 µm or more. The etching amount can be calculated from the difference between the weights of the magnesium component before and after the treatment and the specific gravity and surface area of the magnesium component. When pretreatments such as mechanical polishing, degreasing, and rough etching are performed before the roughening treatment with the etching agent of the invention, the total etching amount will be the total of the etching amount in these pretreatments and the etching amount in the roughening treatment. When the magnesium component is subjected directly to the roughening treatment with no pretreatment, the total etching amount is equal to the etching amount in the roughening treatment.

As the etching depth increases, more contaminants will be removed, such as machine oils and release agents, which are deposited and enter during the molding of the magnesium component, so that the treated surface of the magnesium component can have improved bondability to resins. The etching amount in the depth direction has no specific upper limit. In order to reduce the treatment costs, the total etching amount is generally 300 µm or less, preferably 100 µm or less, more preferably 50 µm or less. The etching amount in the roughening treatment can be controlled by the treatment temperature, the treatment time, and other conditions.

### <Pretreatment>

The roughening treatment using the etching agent of the invention may be preceded by a mechanical polishing treatment such as sand blasting, shot blasting, cutting, or barrel polishing. A chemical treatment such as degreasing may also be performed for the purpose of, for example, removing contaminants such as machine oils and release agents deposited on the surface of the magnesium component to be treated with the etching agent. In this regard, the use of the etching agent of the invention makes it possible to uniformly form a fine roughened shape on the surface of the magnesium component while removing oils deposited on the surface of the magnesium component, oils entering the magnesium component, and other contaminants. Therefore, even when the magnesium component after molding is subjected directly to the roughening treatment without any preceded degreasing treatment, the resulting surface of the magnesium component can have high bondability to resins.

When the etching agent of the invention is used as described above, the roughening treatment can be successfully performed only with the single etching agent without performing a degreasing treatment, rough etching with an acid, and other treatments before the roughening treatment. This can simplify the management of the solution and reduce the number of steps, which can increase the efficiency of the roughening treatment. However, the above is not intended to exclude any pretreatment from the surface roughening method of the invention. When the magnesium component is subjected to the roughening treatment without performing any pretreatment, the etching amount in the depth direction of the magnesium component by the roughening treatment is preferably 6 µm or more, more preferably 8 µm or more, further preferably 10 µm or more.

### <Post-treatment>

After the magnesium component is subjected to the roughening treatment with the etching agent, the roughened surface may be washed with an acidic aqueous solution or an alkaline aqueous solution. After the roughening treatment, the surface of the magnesium component may also be subjected to a chemical treatment or an anodic oxidation treatment, and then a film such as an oxide film or an oxycarbide film may be formed on the treated surface.

### <Examples of use of magnesium component after roughening treatment>

The magnesium component having undergone the roughening treatment with the etching agent of the invention may be used not only as a material for the magnesium-resin composite described below but also as a magnesium member having the ability to be wetted by various solvents. In addition, the magnesium component having undergone the roughening treatment is also expected to have effectively improved bondability not only to resins but also to glass, plated metal coatings, inorganic semiconductors, organic semiconductors, ceramics, and other materials. The etching agent of the invention may be used not only for roughening treatments but also for magnesium component-degreasing treatments and other treatments.

### [Magnesium-resin composite]

After the roughening treatment by the method described above, a resin composition can be bonded to the surface of the magnesium component to form a magnesium-resin composite. In the invention, irregularities suitable for improving bondability between magnesium and a resin composition are formed on the surface of the magnesium component by the treatment with the specified etching agent. This allows reliable bonding between magnesium and the resin composition without adhesive. The method for bonding the resin composition to the surface of the component subjected to the roughening treatment may be, but not limited to, injection molding, extrusion molding, hot press molding, compression molding, transfer molding, cast molding, laser welding molding, reaction injection molding (RIM), LIM molding, spray forming, or any other resin molding method. A composite of magnesium and a resin composition coating may also be produced by forming a resin composition coating on the surface of the magnesium material. In this case, a coating method may be used in which a solution or dispersion of the resin composition in a solvent is applied, or various other methods of application may be used. Other methods of application include, for example, baking finish, electrodeposition coating, electrostatic coating, powder coating, and ultraviolet-curing coating. In particular, injection molding and transfer molding are preferred in view of the flexibility of shaping the resin composition part, productivity, and other considerations. The molding methods listed above may be performed under appropriate conditions selected depending on the resin composition.

### <Resin composition>

The magnesium-resin composite may be produced using any resin composition capable of being bonded to the surface of the magnesium component by any of the molding methods listed above. The resin composition may be selected from thermoplastic resin compositions and thermosetting resin compositions depending on the intended use.

When a thermoplastic resin composition is used, the thermoplastic resin composition may include, as a main constituent, one or a combination of two or more of polyamide resin such as polyamide 6 or polyamide 66, polyethylene resin, polypropylene resin, acrylonitrile-styrene copolymer resin, acrylonitrile-butadiene-styrene copolymer resin, polyvinyl chloride resin, polycarbonate resin, polyacetal resin, polybutylene terephthalate resin, polyethylene terephthalate resin, polyethylene naphthalate resin, polyphenylene sulfide resin, liquid crystalline polyester resin, polyimide resin, syndiotactic polystyrene resin, polycyclohexane dimethylene terephthalate resin, fluororesin, polyvinyl acetate resin, modified polyphenylene ether resin, polyether sulfone resin, amorphous polyarylate resin, aromatic polyether ketone resin, polyether ether ketone resin, liquid crystal polymer, polyether nitrile resin, polysulfone resin, polyamide imide resin, polyether imide resin, ethylene-vinyl acetate copolymer resin, ethylene-acrylic acid copolymer resin, and ethylene-methacrylic acid resin. Among them, polyamide resin, polybutylene terephthalate resin, and polyphenylene sulfide resin are preferred because of ease of molding. Polyamide resin and polyphenylene sulfide resin are more preferred in order to improve the bondability between magnesium and the resin composition. Particularly in order to improve the air or water tightness at the bonded interface of the composite, polyamide resin is preferred, and polyamide 6 is particularly preferred.

When a thermosetting resin composition is used, the thermosetting resin composition may include, as a main constituent, one or a combination of two or more of phenolic resin, epoxy resin, urea resin, melamine resin, unsaturated polyester resin, polyimide resin, diallyl phthalate resin, alkyd resin, polyurethane resin, cyanate resin, and silicone resin. Among them, phenolic resin, epoxy resin, and unsaturated polyester resin are preferred because of ease of molding. Phenolic resin is particularly preferred for improving the bondability between magnesium and the resin composition and improving the air or water tightness at the bonded interface of the composite.

The resin composition may be composed of the thermoplastic resins and/or the thermosetting resins listed above. As long as the effects of the invention are not impaired, the resin composition may contain any of additives, such as various inorganic and organic fillers, flame retardants, flame retardant aids, ultraviolet absorbers, thermal stabilizers, light stabilizers, colorants, carbon black, processing aids, nucleating agents, mold release agents, and plasticizers. In particular, 10 to 200 parts by weight of the inorganic filler is preferably added to 100 parts by weight of the resin so that interface delamination between magnesium and the resin composition can be prevented, which would otherwise be caused by the difference in linear expansion coefficient between magnesium and the resin composition. In order to improve the ability of the composite to release heat, the resin composition preferably contains thermal conductive filler. When insulating properties are required, examples of the thermal conductive filler that can be used include those including a metal oxide such as aluminum oxide, magnesium oxide, silicon oxide, zinc oxide, or titanium oxide, those including a metal hydroxide such as aluminum hydroxide or magnesium hydroxide, those including a metal nitride such as boron nitride or aluminum nitride, those including a metal oxynitride such as aluminum oxynitride, and those including a metal carbide such as silicon carbide. When electrical conductivity is required, thermal conductive filler including metal such as aluminum or copper or a carbon material such as graphite may be used. In order to achieve both good moldability and a high ability to release heat, the content of the thermal conductive filler is preferably from 10 to 1,000 parts by volume, more preferably from 10 to 500 parts by volume, further preferably from 10 to 200 parts by volume, based on 100 parts by volume of the resin.

Besides the resin compositions listed above, various other resin compositions such as photo-curable resin compositions containing acrylic resin, styrene resin, or other resins or reaction-curable resin compositions containing rubber, elastomer, or other materials may also be used to form the magnesium-resin composite.

### <Applications of magnesium-resin composite>

The magnesium-resin composite obtained according to the invention can be used for the production of electronic device parts, home appliance parts, or various machine parts such as transportation machine parts. More specifically, the magnesium-resin composite obtained according to the invention are suitable for use in the production of various electronic device parts such as mobile application parts, home appliance parts, medical instrument parts, vehicle structural parts, vehicle onboard parts, other electric parts, heat radiating parts, and other parts. When the magnesium-resin composite is used to form heat radiating parts, the increased area of the roughened surface of the magnesium component provides an increased contact area between magnesium and the resin composition, which provides reduced heat resistance at the contact interface. Therefore, when used for heat radiating parts, the magnesium-resin composite obtained according to the invention has effectively improved ability to release heat as well as effectively improved bondability or air or water tightness.

### EXAMPLES

Hereinafter, examples of the invention will be described together with comparative examples. It will be understood that the examples described below should not be construed to limit the invention.

### <Roughening treatment by etching>

A 40-mm-wide, 40-mm-long, 2.0-mm-thick, magnesium alloy AZ-91D, die-cast material was directly used as a test substrate without being subjected to any degreasing treatment. In each of examples and comparative examples, the test substrate was etched by immersion in an etching agent with the composition shown in Table 1. The etching conditions (temperature, time, and etching amount) are shown in Table 1. After the roughening treatment by the etching, the test substrate was washed with water and subjected to ultrasonic water washing, which was followed by drying.

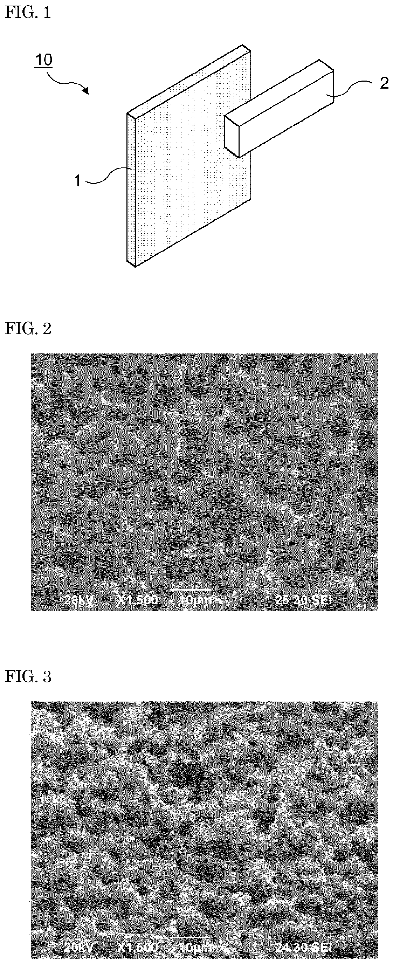

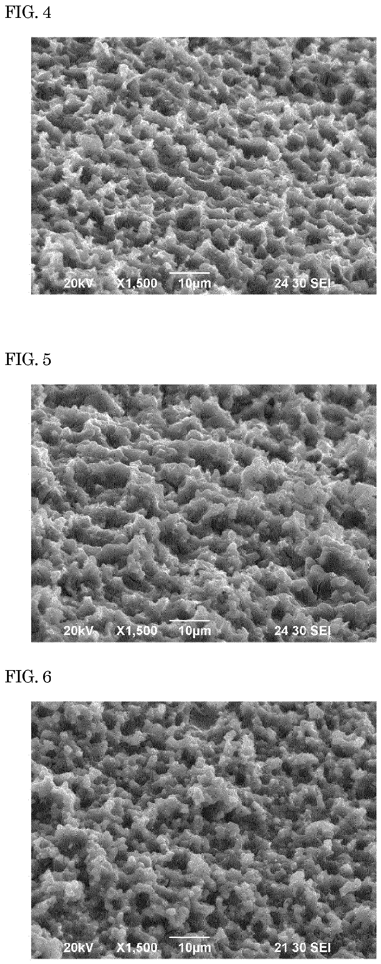

In Table 1, the concentration of each constituent in the etching agent is expressed as the concentration of the corresponding pure material, and the balance of each etching agent shown in Table 1 is ion-exchanged water. The etching amount in the depth direction is the value calculated from the etching time based on the etching rate (µm/minute) determined from the difference between the weights before and after the etching treatment for 60 seconds. FIGS. 2 to 18 each show a SEM observation photograph (acceleration voltage 20 kV, sample tilt angle 45°, magnification 1,500 times) of the test substrate after the etching in each of the examples and the comparative examples.

### <Formation of resin composite and tensile shear strength measurement test>

A magnesium-resin composite 10 shown in FIG. 1 was prepared by a process including overlaying a 10-mm-wide, 30-mm-long, 5.0-mm-thick, nylon 6 (AMILAN CM1011 manufactured by TORAY INDUSTRIES, INC.) resin plate 2 on the surface of the treated test substrate 1 (overlay distance: 10 mm), temporarily fixing them with a heat-resistant polyimide tape, and then curing the nylon resin by heating on a hot plate at 250°C for 2 minutes. The composite was clamped at the magnesium alloy portion and the resin portion, and the tensile shear strength of the junction between them was measured with an autograph (Autograph AGS-X10kN manufactured by Shimadzu Corporation). Results of the tensile shear strength measurement are shown in Table 1.

**Table 1**

| | Etching agents formulation | | | | Treatment conditions | | | Tensile shear strength (MPa) | Surface observation Image |
|---|---|---|---|---|---|---|---|---|---|
| | Acid | | Additive | | Temperature (°C) | Time (Seconds) | Etching amount (µm) | | |
| | Type | Content (wt%) | Type | Content (wt%) | | | | | |
| Example 1 | Malic acid | 0.10 | Dimethylglyoxime | 0.01 | 40 | 360 | 10 | 20.25 | FIG. 2 |
| Example 2 | HCl | 1.50 | N,N-diethylhydroxylamine | 2.00 | 25 | 40 | 10 | 20.81 | FIG. 3 |
| Example 3 | HCl | 0.80 | Trimethylamine oxide | 0.05 | 25 | 310 | 10 | 21.47 | FIG. 4 |
| Example 4 | H₂SO₄ | 0.80 | O-methylhydroxylamine | 1.50 | 25 | 340 | 10 | 20.29 | FIG. 5 |
| Example 5 | HCl | 0.80 | Coconut alkyl dimethylamine oxide | 0.50 | 25 | 320 | 10 | 25.33 | FIG. 6 |
| Example 6 | HCl | 0.10 | N,O-dimethylhydroxylamine hydrochloride | 0.05 | 40 | 350 | 10 | 20.92 | FIG. 7 |
| Example 7 | HCl | 1.50 | Trimethylamine oxide | 1.50 | 25 | 35 | 10 | 22.75 | FIG. 8 |
| Comparative Example 1 | HCl | 5.00 | - | | 20 | 60 | 250 | 13.56 | FIG. 9 |
| Comparative Example 2 | H₂SO₄ | 5.00 | - | | 5 | 180 | 27 | 15.27 | FIG. 10 |
| Comparative Example 3 | HNO₃ | 5.00 | - | | 10 | 180 | 80 | 8.14 | FIG. 11 |
| Comparative Example 4 | HCl | 0.10 | - | | 40 | 300 | 10 | 12.69 | FIG. 12 |
| Comparative Example 5 | HCl | 0.80 | - | | 25 | 300 | 10 | 15.04 | FIG. 13 |
| Comparative Example 6 | HCl | 1.50 | - | | 25 | 30 | 10 | 14.12 | FIG. 14 |
| Comparative Example 7 | HCl | 5.00 | N,N-diethylhydroxylamine | 0.10 | 20 | 60 | 10 | 16.29 | FIG. 15 |
| Comparative Example 8 | HCl | 0.01 | Dimethylglyoxime | 0.10 | 50 | 900 | 10 | 16.04 | FIG. 16 |
| Comparative Example 9 | HCl | 0.80 | LIPONOL C/15* | 0.09 | 25 | 330 | 10 | 15.85 | FIG. 17 |
| | | | ADEKANATE B-94** | 0.01 | | | | | |
| Comparative Example 10 | HCl | 0.80 | Trimethylamine oxide | 0.001 | 25 | 300 | 10 | 17.47 | FIG. 18 |

| | | | | | | | | | |
|---|---|---|---|---|---|---|---|---|---|
| * LIPONOL C/15 (polyoxyethylene coconut alkyl alkylaminoether, manufactured by Lion Corporation) ** ADEKANATE B-940 (mineral oil-based defoaming agent, manufacutred by ADEKA CORPORATION) | | | | | | | | | |

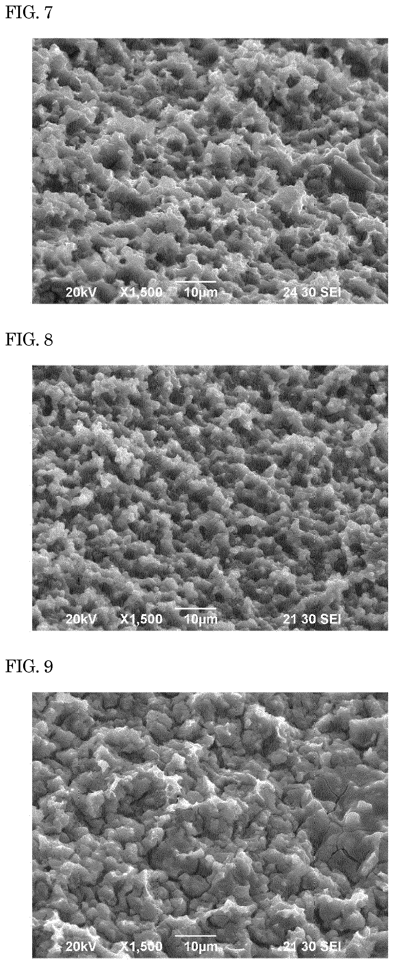

Table 1 shows that all composites of the Examples according to the invention have a tensile shear strength of more than 20 MPa whereas all composites of the Comparative Examples have a tensile shear strength of less than 18 MPa. A comparison between FIGS. 2 to 8 (Examples 1 to 7) and FIGS. 9 to 18 (Comparative Examples 1 to 10) shows that after the roughening treatment, the entire surface of the magnesium material of each of Examples 1 to 7 had fine irregularities with complicated shapes, whereas the irregularities were coarse or in-plane uniformity of the irregularities were poor in each of Comparative Examples 1 to 10. These results suggest that the use of the etching agent of the invention makes it possible to uniformly form fine irregularities on the surface of the magnesium material and to increase the bondability of the magnesium material to the resin.

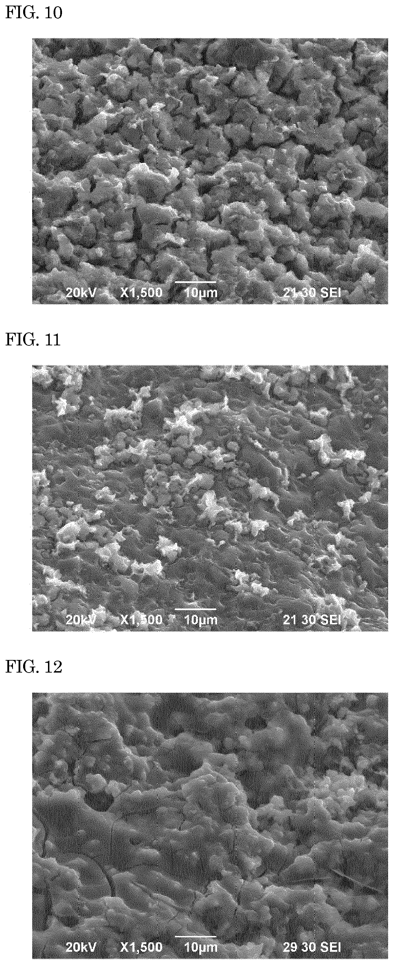

In Comparative Example 3 (FIG. 11) where nitric acid was used, the irregularities of the surface texture were shallow and had poor in-plane uniformity, which may be the cause of the low bonding strength. In Comparative Example 1 or 2 (FIG. 9 or 10) where hydrochloric acid or sulfuric acid was used at a relatively high concentration, the irregularities were deeper and the in-plane uniformity was higher than those in Comparative Example 3, but apparently, the irregularities in Comparative Example 1 or 2 were coarse and low in uniformity as compared with those in the examples (FIGS. 2 to 8). In Comparative Examples 4 to 6 (FIGS. 12 to 14) where the acid was used at a relatively low concentration, the irregularities were made coarse and had poor in-plane uniformity.

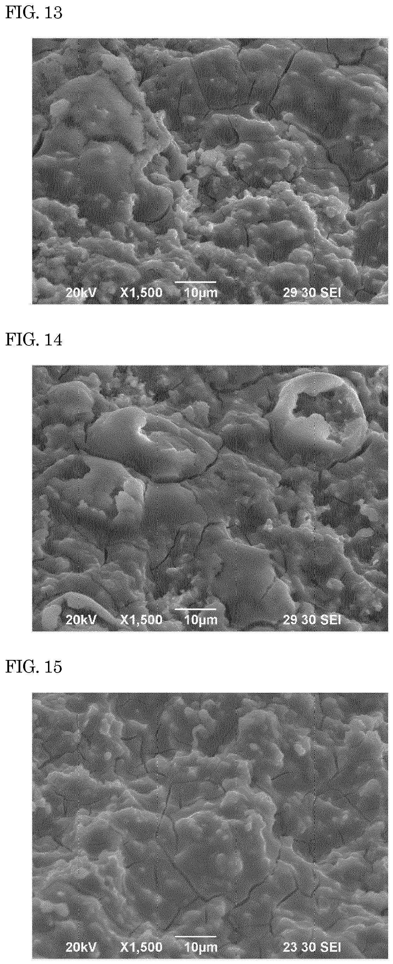

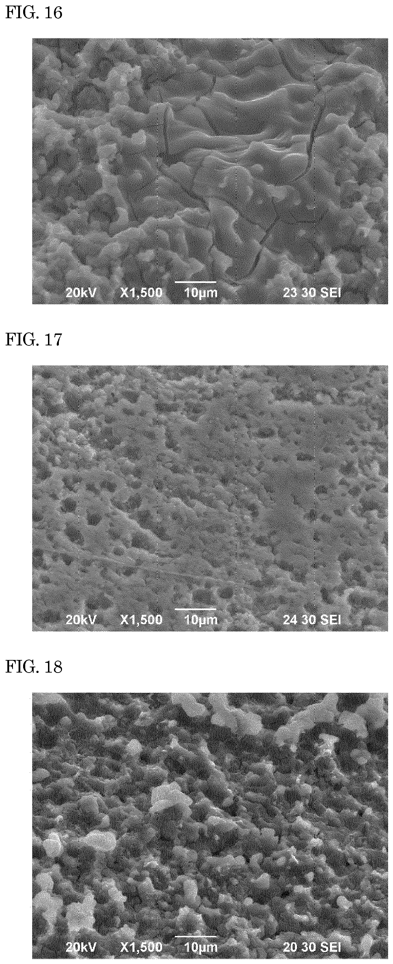

The etching agent of Comparative Example 7 contained hydroxylamine as an organic nitrogen compound but had a high acid concentration. It is suggested that due to the high acid concentration, fine irregularities were not formed (FIG. 15) so that the resin composite had a low tensile shear strength. On the other hand, in Comparative Example 8, due to the low acid concentration of the etching agent, fine irregularities were not formed (FIG. 16), which may be the cause of the low tensile shear strength of the resin composite. In Comparative Example 9 where an acid was used together with a combination of a defoaming agent and an amine surfactant used as a degreasing agent for magnesium, only pits were formed on the surface of the magnesium material, and any irregularities such as those in the Examples were not formed.

In Comparative Example 10 where the concentration of the amine oxide in the etching agent was 0.001% by weight, as shown in FIG. 18, unique fine irregularities were formed on part of the surface of the magnesium material as in each Example, but in-plane uniformity was poor, which may be the cause of the tensile shear strength lower than that in the Examples.

In contrast to these results, when the etching agents of the Examples were used, the resulting surface of the magnesium material had a roughened shape in which fine irregularities or projections are further formed on the surface of projections. It is suggested that such a unique roughened shape with in-plane uniformity contributes the increased bondability to the resin.

## Claims

1. An etching agent for use on a magnesium component,
the etching agent is an aqueous solution comprising: at least one acid selected from the group consisting of inorganic acids other than nitric acid, and organic acids; and an organic nitrogen compound having a molecular structure containing N-OH or N-O-, wherein
a concentration of the acid is from 0.05 to 3% by weight and a concentration of the organic nitrogen compound is from 0.005 to 5% by weight.

2. The etching agent according to claim 1, wherein the organic nitrogen compound is one or more selected from the group consisting of hydroxylamines, oximes, and amine oxides.

3. The etching agent according to claim 1 or 2, wherein the acid is hydrohalic acid or sulfuric acid.

4. A replenishment solution to be added to the etching agent in continuous or repeated use of the etching agent according to any one of claims 1 to 3, wherein
the replenishment solution is an aqueous solution comprising an organic nitrogen compound having a molecular structure containing N-OH or N-O-.

5. A surface roughening method for roughening a surface of a magnesium component,
the method comprising a roughening treatment step of roughening the surface by bringing the etching agent according to any one of claims 1 to 3 and the surface of the magnesium component into contact with each other.

6. The surface roughening method according to claim 5, wherein a total etching amount in depth direction of the magnesium component is 6 µm or more.

7. The surface roughening method according to claim 5 or 6, wherein
in the roughening treatment step, roughening of the surface of the magnesium component is performed while the replenishing solution according to claim 4 is added to the etching agent.

8. A method for manufacturing a magnesium-resin composite, the method comprising:
roughening treatment step of roughening a surface of a magnesium component by the method according to any one of claims 5 to 7; and
resin bonding step of bonding a resin composition to the surface of the magnesium component after the roughening treatment.

9. The method for manufacturing a magnesium-resin composite according to claim 8, wherein
in the resin bonding step, the resin composition is bonded to the surface of the magnesium component after the roughening treatment by an injection molding or a transfer molding.
